# EUROPEAN PATENT SPECIFICATION

(11) **EP 4 046 044 B1**
(45) Date of publication and mention of the grant of the patent: **15.01.2025**
(21) Application number: 20781302.3
(22) Date of filing: 18.09.2020
(51) Int. Cl.: G06F 21/45, G06F 21/60, H04L 9/32, G06F 16/27, G06F 16/901, H04L 9/00

(54) **SECURE DATA SYNCHRONIZATION BETWEEN OFFLINE AND ONLINE SYSTEMS**
SICHERE DATENSYNCHRONISATION ZWISCHEN OFFLINE- UND ONLINE-SYSTEMEN
SYNCHRONISATION DE DONNÉES SÉCURISÉE ENTRE DES SYSTÈMES HORS LIGNE ET EN LIGNE

(30) Priority: 14.10.2019 DK PA201970641
(43) Date of publication of application: 24.08.2022
(73) Proprietor: VESTAS WIND SYSTEMS A/S, 8200 Aarhus N (DK)
(72) Inventor: COLAZINGARI, Roberto Ugo Di Cera, 4150-741 Porto (PT)
(74) Representative: Vestas Patents Department
(86) International application number: PCT/DK2020/050259
(87) International publication number: WO 2021/073701

(56) References cited:
- US-A1- 2013 160 083
- US-A1- 2018 123 804

## Description

### TECHNICAL FIELD

The present disclosure relates to systems and methods for synchronizing data securely between offline and online systems. Particularly, the disclosure relates to systems and methods of secure data synchronization for use in the context of power plants, more particularly renewable energy power plants.

### BACKGROUND

In distributed systems, maintaining an up-to-date list of user privileges is achievable if all sub-systems making up the system are online sub-systems that are connected at all times by a wide-area network.

However, some distributed systems are a mixture of online sub-systems and offline sub-systems. For example, in power plants, such as wind parks, some or all of the controllers may be isolated from wide-area communications networks such as the internet in order to maintain security and protect the controllers from external attack, while other controllers may be connected to the network. In such systems, the online sub-systems are easily updated but the offline sub-systems lag behind because they cannot be updated readily over the network. Unfortunately, therefore, data within the system may not be trustworthy and may be subject to tampering by unauthorised users whose privileges have not yet been revoked in the offline systems.

In the state of the art, updating offline sub-systems is a complex task that is performed manually. The process of managing manual updates is prone to human error. Additionally, manually updating sub-systems may compromise data authenticity, validity, as well as privacy and security. There is no way of knowing whether the data has already been compromised by unauthorised access.

If tampered data is allowed to enter into the database system at any point, the whole system is compromised which therefore reduces user-confidence in the system. Subsequent validation of the authenticity and integrity of the data may be hard to achieve once a part of the system has been compromised. It is also difficult to identify which sub-system contains the correct data as that data may differ from system-to-system due to tampering.

These concerns are particularly relevant to authentication databases. For example, in the context of a wind power plant which has a distributed control architecture, a user who performs maintenance on the distributed system or acquires data from the controllers of the power plant undergoes an authentication process via the authentication system in order to access the controllers. If a system requires a user to be authenticated to access it, normally that system has stored information of the allowed users in the moment that the system is deployed placed into service. Once the system is operational, any set of user credentials that are in that initial information can authenticate and gain access to a sub-system, thereby being able to perform operations that can modify the data. If a sub-system is offline, those changes are even harder to monitor and may create inconsistency and confusion in the data.

It is an aim of the present invention to address one or more of the disadvantages associated with the prior art.

### SUMMARY OF THE INVENTION

According to an aspect of the present invention there is provided a method for maintaining transaction security in a distributed system. The distributed system comprises an online system, an offline system, and a removable storage device. The online system comprises at least three online sub-systems in communication via a communications network. Each sub-system stores an online ledger comprising cryptographically-linked entries indicating earlier data transactions. The offline system comprises an offline sub-system. The offline system is unconnected to the network and the online system. The offline sub-system stores an offline ledger that is a full or partial copy of the online ledger. The removable storage device has a data store configured to store a copy of the online ledger. The removable storage device is configured to interface with at least one online sub-system and with the offline sub-system independently. The method comprises the steps of: accessing, at the offline sub-system, the copy of the online ledger stored by the removable storage device when the device is connected to the offline sub-system and unconnected to the network and the online system; determining that the copy of the online ledger stored by the removable storage and the offline ledger are versions of the same ledger; and in response to determining that the copy of the online ledger and the offline ledger are versions of the same ledger, updating the offline ledger with reference to the online ledger thereby achieving synchronisation between the offline ledger and the online ledger.

By independently, it is meant that the removable storage device can only interface with one sub-system at a time. The removable storage device connects with the offline system specifically when it is unconnected to any of the other components of the network to maintain security and the offline nature of the offline system, and so as to not act as a conduit for malicious attacks to the offline system.

Two ledgers may be versions of the same ledger if the shared entries correspond with each other. Where one ledger is longer than another ledger, the ledgers may be versions of the same ledger if the entries of the shorter ledger correspond to entries of the longer ledger. Particularly, the entries may be in the same order and may be cryptographically linked in the same way. Two ledgers may be versions of the same ledger if the only difference between the ledgers is one or more of the most recent entries in one of the ledgers, so that all entries found in the shorter ledger are also found in the longer ledger, in the same arrangement. Conversely, two ledgers may not be version of the same ledger if one or more entries in the ledger differ in a material way, or if the order of the entries in the ledger differ. Two ledgers may be incompatible if there are any discrepancies between any of the entries found in both ledgers or if one ledger contains entries that the other ledger does not other than the most recent entries of the longer ledger.

By updating the offline ledger with reference to the online ledger, it is meant that all entries missing from the offline ledger that are identified in the copy of the online ledger on the removable storage device are replicated in the offline ledger so that the offline and the copy of the online ledger are identical. This means that the offline and online ledgers will also be substantially identical, where substantially identical means that they are identical up to the most recent point of interaction between the online sub-system and the removable storage device.

By performing the above method, the integrity, validity, privacy, and security of data in an offline part of a wider system is ensured. In conventional distributed systems that merely use a database to update offline systems, the data cannot be trusted because it is not clear whether it is the same data that originated at online system. However, in the present invention, the operations performed on the data are completely traceable so that it can be confirmed that the data is the correct data and has not been tampered with in any way. The use of a cryptographic ledger in combination with the removable storage device and the check performed on the offline ledger and copy of the online ledger guarantees that the correct data is updated in the offline system.

Furthermore, performing the above method reduces the chance that the offline sub-system will be contaminated with incorrect data. Once discrepancies are found in data used in conventional distributed systems, it is difficult to determine which data is the incorrect data because each system may have a different record. However, using the above method, the contamination is identified before it can be spread, thereby protecting the offline sub-system.

The provision of a removable storage device and a straightforward connection, access, check, and update methodology creates a straightforward process for a user of the system to carry out. For example, in wind power networks, the user may be a maintenance worker who needs access to particular parts of the offline wind power network quickly and without complexity. The provision of a removable storage device and the associated method of synchronizing data result in a straightforward process that does not require complex interaction between the user and the system.

The ledger may be a block chain.

The method may comprise determining that the copy of the online ledger stored by the removable storage device and the offline ledger are compatible, and updating the offline ledger in response to determining that the copy of the online ledger and the offline ledger are versions of the same ledger and compatible.

The method may comprise terminating interaction with the removable storage device if it is determined that the copy of the online ledger and the offline ledger are not versions of the same ledger. The method may comprise terminating interaction with the removable storage device if it is determined that the copy of the online ledger and the offline ledger are incompatible. Terminating the interaction on identification of incompatible or compromised data protects the offline system from any harmful data or contamination of its ledger.

The method may comprise authorising the user and/or permitting data operations to be performed by the authorised user only when synchronisation is achieved between the offline and online ledger. That is, that the actions may only be performed once the ledger in the offline sub-system matches the copy of the ledger in the removeable storage device. This is a further layer of security that ensures that a user cannot maliciously access a sub-system until it is identified that the user is permitted to access it. The synchronisation allows the offline sub-system to access the most up-to-date data to determine whether the user is permitted to access the sub-system.

Authorising the user may comprise determining a user identity credential, and comparing the identity credential of the user with predetermined authorisation data. The user may be considered to be an authorised user if the identity credential matches the authorisation data. The offline ledger may comprise the authorisation data. The user may be authorised based on data contained in the offline ledger.

The method may comprise checking that a most recent data transaction in the copy of the online ledger is a valid transaction for synchronizing the ledger with the offline sub-system. In response to determining that a most recent data transaction in the copy of the online ledger is a valid transaction for synchronizing the ledger with the offline sub-system, the method may comprise performing the step of determining that the copy of the online ledger stored by the removable storage and the offline ledger are versions of the same ledger. These steps add another layer of security by ensuring that the removable storage device has to be reconnected to the online system between visits to offline sub-systems. By a valid transaction for synchronizing the ledger, it may be meant that the most recent data transaction is a transaction generated at an online sub-system that indicates that the removeable storage device will be connecting to the offline system. In other words, the removeable storage device has been connected to the online system, a request has been made for access to the offline sub-system, the request has been granted, and the online sub-system has generated a transaction, which is validated, and it has been written into the ledger. This may therefore be referred to as a granted request to access and/or update the offline ledger of the offline sub-system. The valid transaction may have been by the online sub-system that created it and validated by two other online sub-systems.

The method may comprise, if the most recent data transaction is not a valid transaction for synchronizing the ledger, terminating interaction with the removable storage device. The method may comprise creating a data record that is separate from the offline ledger indicating the identity of the removable storage device and/or user if the most recent data transaction is not a valid transaction for synchronizing the ledger.

The method may comprise generating, by the offline sub-system, a data record that is separate from the ledger in the removable storage device to indicate the synchronization was successful. The method may comprise converting the record to a transaction in the online ledger when the removable storage device is connected to one of the online sub-systems. The method may comprise validating the transaction at two other online sub-systems at least. In this way, the online sub-systems are able to keep track of when the offline sub-system was last accessed, and what was done at the offline sub-system if anything. Furthermore, the online ledger remains updated without causing a conflict between when a transaction was made because only online systems are updating - the offline sub-system and removeable storage device are not permitted to create new transactions in the ledger.

The method may comprise at one of the online sub-systems: performing one or more transactions in response to a request from the user; propagating the performed transaction to and receive validation of the transaction from at least the two other online sub-systems via the communications network; and storing the transaction as an entry or part of an entry of the online ledger in response to receiving the validations.

According to another aspect of the invention, there is provided a system for maintaining transaction security between online and offline sub-systems. The system comprises: an online system comprising three online sub-systems in communication via a communications network, and that each stores an online ledger comprising cryptographically-linked entries indicating earlier data transactions; an offline system comprising an offline sub-system and being unconnected to the network and the online system, the offline sub-system storing an offline ledger that is a full or partial copy of the online ledger; and a removable storage device configured to independently interface with at least one online sub-system and the offline sub-system, and configured to store a copy of the online ledger. The system is configured to perform the method described above.

Each online sub-system may comprise: an online sub-system data store storing the online ledger; a user interface for receiving input from a user; a communications module for communication with at least two other online sub-systems via a communications network that each store the online ledger and are configured to validate transactions performed by any online sub-system connected to the network; a device interface for interacting with the removable storage device; and/or a processor in communication with each of a data store, a user interface, a device interface, and a communications module.

The processor may be configured to: perform one or more transactions in response to a request from the user; propagate performed transactions to and receive validation of transactions from at least the two other online sub-systems via the communications network; and/or store transactions as entries or part of entries of the online ledger in response to receiving validations.

The offline sub-system may comprise: an offline sub-system data store storing the offline ledger; an interface for receiving input from a user; a device interface for interacting with the removable storage device; and/or a processor. The processor may be configured, at least, to: access the copy of the online ledger stored by the removable storage device when the device is connected to the offline sub-system and unconnected to the network and the online system; determine that the copy of the online ledger stored by the removable storage device and the offline ledger are versions of the same ledger; and in response to determining that the copy of the online ledger and the offline ledger are versions of the same ledger: update the offline ledger with reference to the online ledger thereby achieving synchronisation between the offline ledger and the online ledger.

The system may comprise a plurality of offline sub-systems and/or a plurality of removable storage devices.

The offline sub-system may be a wind turbine controller or a power plant controller.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a typical power network architecture according to an embodiment of the invention;
Figure 2 shows a system according to an embodiment of the invention;
Figure 3 shows an online sub-system of the system of Figure 2 in more detail;
Figure 4 shows an offline sub-system of the system of Figure 2 in more detail;
Figure 5 shows a removable storage device of the system of Figure 2 in more detail;
Figure 6 shows an example data architecture for use in the removable storage device of Figure 5; and
Figure 7 shows a method according to an embodiment of the invention.

### DETAILED DESCRIPTION

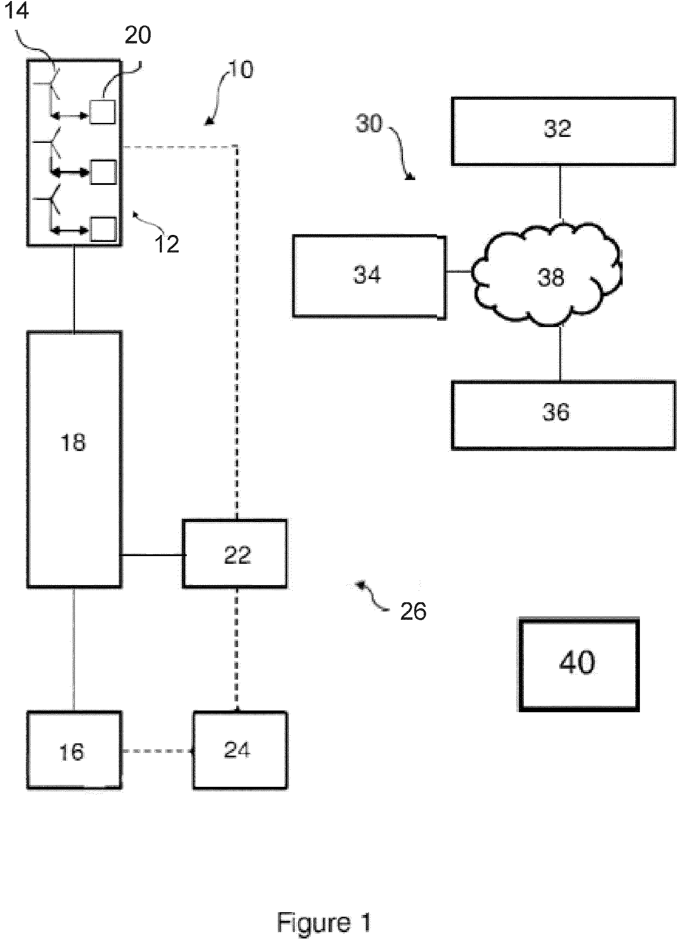

To provide setting for the invention, Figure 1 illustrates a typical architecture in which a wind power plant (WPP) is connected to a main transmission grid as part of a wider power network. As will be understood by the skilled reader, a WPP comprises at least one wind turbine generator (WTG), and is also known as a wind park or a wind farm. The example shown is representative only and the skilled reader will appreciate that other specific architectures are possible, in relation to both wind power plants and power plants for other renewable energy sources. Thus, the invention also relates to renewable energy power plants in general, rather than being specific to wind power plants as in the illustrated embodiment.

The diagram of Figure 1 should only be taken as a representation of a power network. Alternative configurations of power network and power plants are known and it is expected that other known components may be incorporated in addition to or as alternatives to the components shown and described in Figure 1. Such changes would be within the capabilities of the skilled person. For example, substations or extra transformers would be expected to be incorporated in the wind power plant depending upon the number of turbines included in the plurality of wind turbines.

Figure 1 shows a power network 10 and an online system 30. The power network 10 is considered to be an offline system. An online system generally is a wide-area computer network including at least three online computer terminals or sub-systems connected and capable of communicating a particular type of data via a communications network. In contrast, an offline system is a local network unconnected to the online system comprising one or more offline sub-systems that are generally unconnected to one another, or at least are unable to communicate the same data between themselves. By unconnected, it is meant that there is no direct data connection between the systems such as a wire or wireless network, and data transfer can only be enacted by physical devices that connect to one of the systems at a time.

The power network 10 incorporates a WPP 12. The WPP 12 includes a plurality of WTGs 14. A single WTG would also be possible. Each of the plurality of WTGs 14 converts wind energy into electrical energy, which is transferred from the WTGs 14 to a main transmission network or main grid 16, as active current, for distribution. A collector network 18 extends between the WPP 12 and the main grid 16.

The online system 30 includes a central server 32, an independent verifier or verification system 34, and a user terminal 36 connected to one another via a communications network 38. These sub-systems, i.e. the central server 32, independent verifier 34, and user terminal 36, will be referred to as 'online sub-systems' hereafter. The roles and configuration of the online sub-systems will be discussed in more detail later. The communications network 38 is a wide area communications network such as the internet and permits the communication of the central server 32, independent verifier 34, user terminal 36, and any other sub-systems connected to the communications network 38. The central server 32 is centralised computer system that stores data relating to authorised users of the online system 30 and power network 10. The central server 32 enables changes to the data to be made centrally and may be part of more than one online system 30, thereby retaining a plurality of different data sets for a plurality of different online systems 30. The independent verifier 34 is an independent sub-system for providing decentralization so no overall control of the online system is held by any particular sub-system and that provides verification of information. The independent verifier 34, which is provided as one of the initial set of sub-systems, ensures by its independence that the other initial sub-systems and subsequently added sub-systems can be trusted. The independent verifier 34 is independent by virtue of being operated by a different operator to any of the other sub-systems. The independent verifier 34 may be set by its operator to operate automatically to perform its function or may be operated by the operator. The user terminal 36 is a computer terminal accessible by a user to whom the data relating to authorisation relates.

Considering the power network 10, each of the WTGs 14 is associated with a respective WTG controller 20. In some embodiments, a set of WTGs may share a single, semi-centralised WTG controller, such that there are fewer WTG controllers than WTGs. WTG controllers 20 can be considered to be computer systems capable of operating a WTG 14 in the manner described herein.

During operation of the WPP 12, the WTG controllers 20 operate to implement control commands received from a power plant controller (PPC) 22 or operate autonomously to control the WTGs 14. The PPC 22 may also directly control the WTGs 14 or to an aspect of their functionality.

The PPC 22 is connected to the collector network 18 and is also connected directly to the WPP 12. The role of the PPC 22 is to act as a command and control interface between the WPP 12 and a grid operator or transmission system operator (TSO) 24. The TSO 24 is responsible for indicating or translating the needs and requirements of the main grid 16 to the PPC 22. The PPC 22, in its role as command and control interface, interprets the power delivery demands requested of it by the TSO 24 and manages the WTGs 14 in the WPP 12 in order to satisfy those requirements, whilst taking into account other operative factors such as grid faults and sudden changes in output or measured grid voltage.

The PPC 22 is a suitable computer system for carrying out the controls and commands as described above. The PPC 22 is equipped to measure a variety of parameters including a representative power output that will be supplied to the main grid 16 by the WPP 12 at a point of intersection between the grid 16 and the collector network 18.

The PPC 22 communicates control commands to the WTG controllers 20, or directly to the WTGs 14, in a suitable manner. It will be noted that Figure 1 is a schematic view, so the way in which the control commands are transferred is not depicted explicitly. However, it will be appreciated that suitable cabling may be provided to interconnect the PPC 22 and the WTGs 14 or WTG controllers 20. The interconnections may be direct or `point to point' connections, or may be part of a local area network (LAN) operated under a suitable protocol (CAN-bus or Ethernet for example). Also, it should be appreciated that rather than using cabling, the control commands may be transmitted wirelessly over a suitable wireless network, for example operating under WiFi^{™} or ZigBee^{™} standards (IEEE802.11 and 802.15.4 respectively).

As illustrated in Figure 1 and as described above, however, the PPC 22 and WTG controllers 20 are unconnected to the wide-area communications network of the 'online' system 30 and are isolated from it. The PPC 22 and WTG 20 can therefore be considered to be part of an 'offline' system 26, as they are isolated from the communications network that connects the central server 32, independent verifier 34, and user system 36. The PPC 22 and WTG controllers 20 are maintained offline for security purposes, so that the data and information stored therein cannot be accessed remotely and so that they cannot be operated remotely. In effectively keeping the controllers 'offline', security of the information therein is maintained and the controllers cannot be subjected to remote network-based attack. Accordingly, the data in the PPC 22 or WTG controller 20 cannot be accessed, unless a user accesses it directly at the PPC 22 or WTG controller 20.

There is still a need to access the controllers 20, 22 to enable maintenance to be performed and data to be accessed. Therefore, individual users may be authorised to access the PPC 22 and WTG controllers 20. As the PPC 22 and WTG controllers 20 are computer systems, the user may input login credentials that are then verified against a list of authorised users. If the user's login credentials are correct, they are allowed to access the relevant system and make use of the system and data therein. For example, the user may extract data or edit settings relating to how the PPC 22 and/or the WTG controllers 20 are to act in certain situations. It will be appreciated that to permit a user to input login credentials, the PPC 22 and WTG controllers 20 have a user terminal comprising at least input means and a display connected to a processor and data store.

In the art, a centralised list of users and their authorisations is maintained in a dedicated database. Each time an update is made to the list, a manual update of the list of authorisations in each offline system is also required. This leaves the possibility open that an unauthorised user may access a controller before the update is performed. Furthermore, if the online sub-systems do not update quickly enough, there may be differences in who is allowed to access which systems. There is still also the possibility that all systems of the art may be tampered with.

In the present invention, the integrity of the data is maintained in the online system 30 and offline system 26 by the provision of a block chain or other ledger comprising cryptographically linked entries. Data is recorded in blocks that are linked cryptographically to one another, and data written to a block must be verified by other sub-systems in order to be accepted as a valid transaction. To link the blocks of the chain together, each block has a cryptographic hash that refers to the previous block number. Each block comprises a block number, a hash, a time stamp, and any associated data, i.e. transactions. A transaction may be the addition, deletion, or amendment of data. Each of the PPC 22, controllers 20, central server 32, independent verifier 34, and user terminal 36 are considered to be sub-systems.

In the context of Figure 1, the data in the system is authorisation data, i.e. which users are permitted to access which sub-systems and the credentials they use to access these sub-systems. The authorisation data may also comprise who has accessed which sub-system and when the sub-system was accessed, for example by a timestamp or other metadata. In alternative embodiments, the data may be a different form of data other than authorisation data. For example, the invention is equally applicable to protect the integrity of any kind of data that can be accessed and altered or copied.

The provision of a block chain ensures that all data is linked to the earlier data, eliminating the possibility that data can be tampered with. As all the data is cryptographically linked and is confirmed by other subsystems as well as reconfirmed each time new blocks are created, the block chain provides for a highly secure data set in the online system 30.

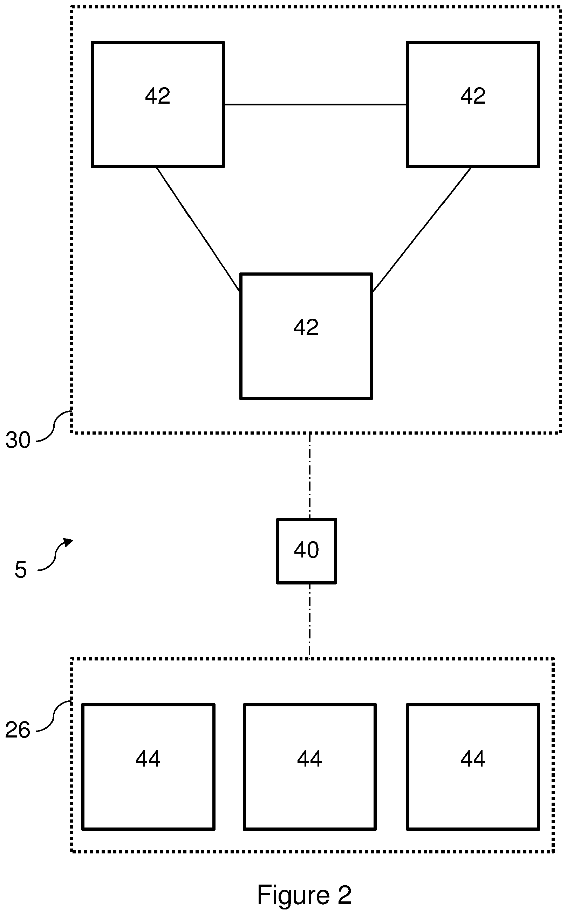

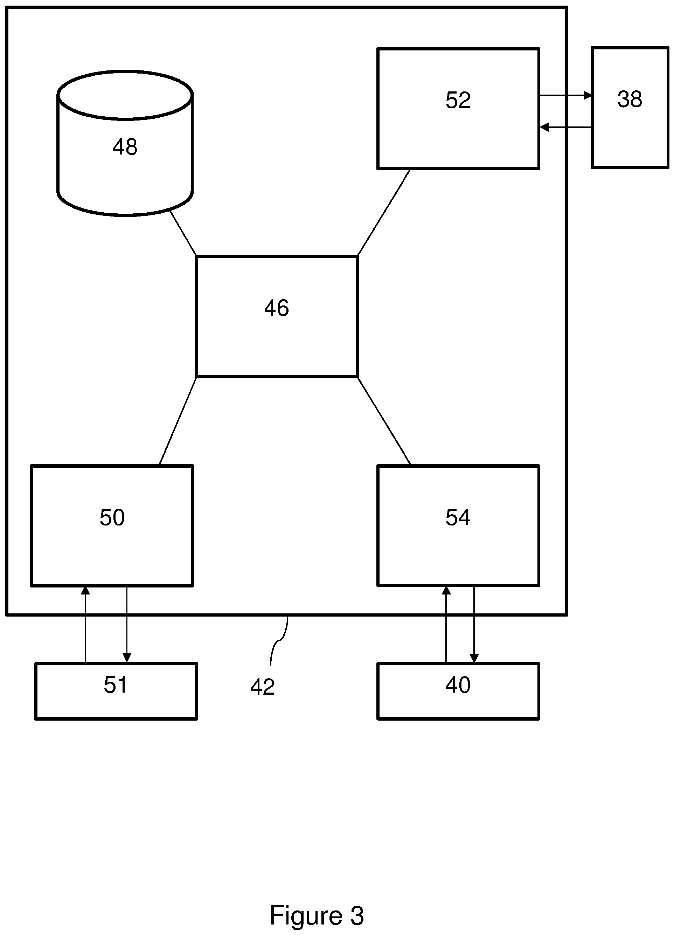

In combination with the block chain, a link between online and offline systems 30, 26 is provided in the form of a removable storage device 40. The interaction of online and offline sub-systems via the removable storage device 40 and block chain is described below with reference to the system shown in Figure 2 and the sub-systems of Figures 3 to 5. The system shown in Figure 2 is a generalised version of the system of Figure 1.

The system 5 of Figure 2 comprises an online system 30, an offline system 26, and a removable storage device 40, such as a USB pen drive or a transportable hard drive. The online system 30 comprises a plurality of online sub-systems 42. The offline system 26 comprises a plurality of offline sub-systems 44. The removable storage device 40 is capable of interacting with at least one of the plurality of online sub-systems 42 and at least one of the plurality of offline sub-systems 44. The online and offline sub-systems 42, 44 may be referred to as nodes of the system 5. Although three online sub-systems 42 and three offline sub-systems 44 are shown here, in other embodiments one or more online sub-systems 42 may be provided, and one or more offline sub-systems 44 may be provided. Similarly, although only a single removable storage device 40 is illustrated, a plurality of removable storage devices 40 may be provided. In general, it is envisaged that each user of the system 5 will be provided with a removable storage device 40.

The removable storage device 40 is provided to ensure that the authorisation data at each offline sub-system 44 are up to date before a user is permitted to access that sub-system 44, so as to maintain the integrity of the data. The removable storage device 40 is configured to interact with at least one of the online sub-systems 42 in order to store a copy of the block chain. The removable storage device 40 is also configured to interact with at least one of the offline sub-systems 44, in order to permit the data in that offline sub-system 44 to be updated so that the block chain is synchronized across the system 5. It is important to note that the removable storage device 40 may only interact with one sub-system 42, 44 at any time, so that the offline system 26 remains offline. In other words, the sub-systems interact or interface with the removable storage device independently.

Effectively, therefore, the removable storage device 40 acts as a go-between or buffer between systems, linking the offline and online systems 30, 26 without providing a physical connection that would make the offline system 26 online. The removable storage device 40 ferries or transports the important data stored in the block chain from the online system 30 to the offline system 26 to allow the offline system 26 to be intermittently updated. Through this transfer and the use of an untamperable, verifiable ledger, the integrity and security of the data in the entire system 5 is maintained.

An example online sub-system 42 is illustrated in Figure 3. The online sub-system 42 comprises a central processor 46 in communication with a data store 48, a user interface 50, a communications module 52, and a device interface 54. The user interface 50 is configured to receive input commands from and communicate output data to a user 51. The communications module 52 is configured for communication with other online sub-systems 42 via the network 38. The device interface 54 is configured for interaction with the removable storage device 40. The processor 46 carries out operations based on user input to the user interface 50, device input to the device interface 54, communications received via the communications module 52, or data or software stored in the data store 48.

For example, the online sub-system 42 may comprise the user terminal 36. In this embodiment, the user interface 50 may comprise a monitor and input device such as a keyboard and mouse of the terminal 36. The communications module 52 may comprise a wired or wireless internet connection, and the device interface 54 may comprise a USB or HDMI port for receiving a corresponding interface of the removable storage device 40.

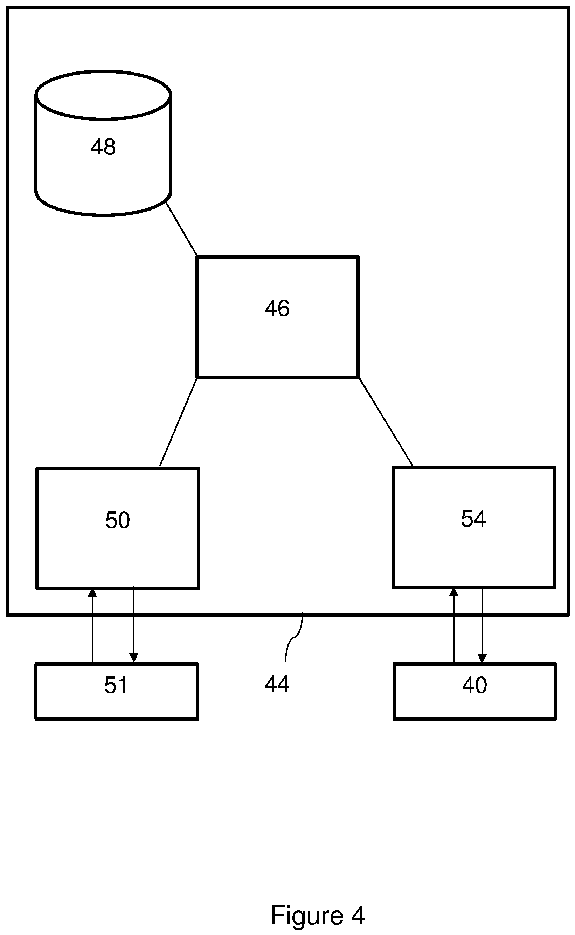

An example offline sub-system 44 is illustrated in Figure 4. The offline sub-system 44 is the same as the online sub-system 42 with the exception of the communications module 52. The offline sub-system 44 does not require a communications module 52 as it does not need to connect with other offline sub-systems 44 over the communications network 38. Alternatively, the offline sub-system could have identical hardware to an online sub-system 42, but with the communications module 52 rendered inactive. Therefore, it can be seen that online sub-systems 42 can become offline sub-systems 44. The offline sub-system 44 may comprise a means for communicating commands to other offline systems 44 over a local network as described in reference to Figure 1 above. Therefore, the offline sub-system 44 comprises a central processor 46 in communication with a data store 48, a user interface 50, and a device interface 54. As before, the user interface 50 is configured to receive input commands from and communicate output data to a user, the device interface 54 is configured for interaction with the removable storage device 40, and the processor 46 carries out operations based on user input to the user interface 50, device input to the device interface 54, or data or software stored in the data store 48.

The processors 46 of the online sub-systems 42 and the offline sub-systems 44 may operate a service that act to allow data to be received and handled in more than one way, acting as the interface between the main operational parts of the sub-systems and the databases that are in use. For example, in online sub-systems 42, the service may operate so as to act either as a proxy, i.e. as an intermediary for data or requests, or to validate transactions and to manipulate data in the data store. Running such a service prevents data storage where it is not necessary, and only permits the transactions that are validated and can be stored in the block chain to be stored. In this way, the service regulates access to the stored data in the block chain to maintain data integrity.

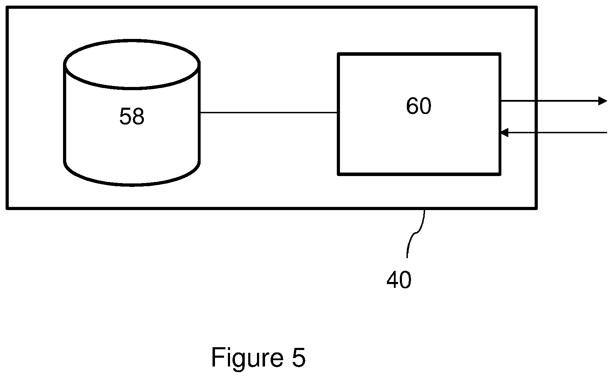

An example removable storage device 40 is illustrated in Figure 5. The removable storage device 40 comprises a data store 58 and a device interface 60 for communicating with corresponding device interfaces 54 of the online and offline sub-systems 42, 44. The data in the store 58 of the device 40 is capable of being transferred via the device interface 60. The main purpose of the device interface 60 is to permit the copying of the block chain to the removable storage device 40. The data store 58 is large enough to store the entire block chain. The removable storage device 40 may have an FAT32 file system. It is envisaged that the removable storage device 40 is a USB pen drive, or a transportable hard drive. However, any transferrable and transportable storage device that remains offline when connected to the offline system 44 may form the removable storage device 40.

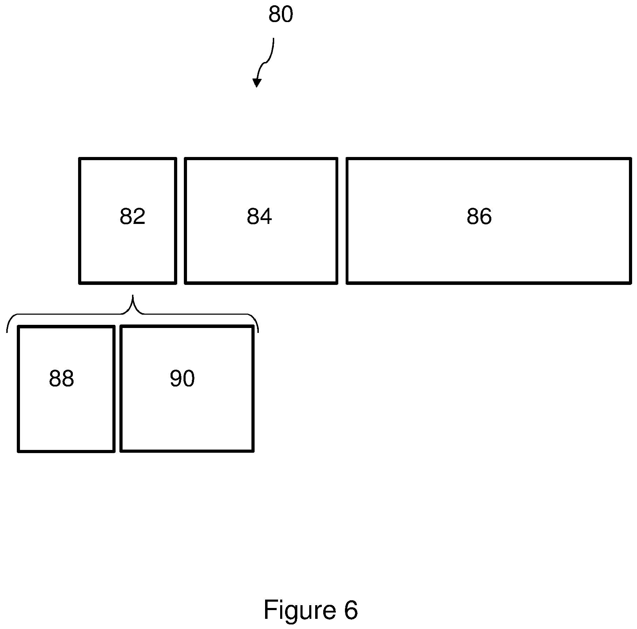

An example data architecture 80 for use in the data store 58 in the removable storage device 40 is shown in Figure 6. The data architecture 80 may also be the structure of a block of the block chain. The removable storage device 40 may comprise a plurality of blocks in the form of the architecture of Figure 6.

The architecture 80 comprises a header portion 82, an operations portion 84, and a data portion 86. The header portion 82 is split into two parts 88, 90, the first part 88 recording blocks of the block chain and the second part 90 providing a record of the corresponding hash signatures of the blocks. The header 82 therefore comprises a record of transactions and the blocks for which those transactions form a part. The operations portion 84 indicates what the transaction was, i.e. what data operation was performed in the transaction. The data operation may be updating data, deleting data, or amending data. The data portion 86 of the architecture 80 is what data the operation was performed on and the result.

The operation of the system 5 and its various sub-systems 42, 44 and removable storage device 40 will now be described with reference to Figures 1 to 5.

Initially, the system 5 comprises a master node and at least two other online nodes. The master node and the two other online nodes are online sub-systems 42 such as those in Figure 2. All online nodes have a unique key that identifies it as the master node and is used for validating transactions. The key is an alphanumeric string that may act as an address for the node. The key may be based on the Bech32 address format, and is generally 90 characters long at most. The master node, which in Figure 1 is represented by the central server 32, is the node at which data originates, and where nodes can be assigned. At least one of the online nodes may be a user terminal, and at least one node may be an independent verifier 34, also referred to as a system integrator. An independent verifier 34 is provided as a node to ensure that the system 5 is de-centralized and that no overall control is held by any particular node, thereby further ensuring the integrity of the data in the block chain and the subsequent verification of data.

The master node is a validator and enables the implementation of the Proof of Authority consensus algorithm. Any changes to data made at online nodes are validated by the master node. This is particularly useful in identifying systems where data is corrupted because the master node maintains an overview of the data and the changes being made in all connected systems. The master node also maintains a table detailing the statuses of sub-systems, i.e. nodes, within the system, both online and offline. In doing so, the last synchronization of each sub-system can be recorded, further improving data integrity.

To be considered a node, each other sub-system 42, 44 requires a valid key. The key is assigned by the master node, and is valid once it has been validated by other nodes within the system 5. The assignation of keys by the master node is recorded as a transaction in the block chain.

At least three entries are therefore provided initially in the block chain, with one entry per online sub-system 42 that has been assigned a key and therefore designated as a node. These entries are stored as transactions in the first block of the block chain. The reference in the hash of the first block to the previous block is a null field.

For online sub-systems 42, assigning a key to a node is performed via the communications network 38 that links the online sub-systems 42. For offline sub-systems 44, each sub-system 44 is assigned a key by the master node that is validated by the online nodes 42. This key, once valid, can be exported to the offline sub-system 42 using a storage device. The storage device may be the removable storage device 40. Thus, to be a node, the offline sub-system 42 has to initially interact with a storage device to receive its validated key and the transactions of the block chain prior to its key.

In general, therefore, the creation of an online node is performed using the following method:
- Assign key for online node at master node;
- Create transaction for key assignation in block chain;
- Validate key transaction at other online nodes;
- Transmit key transaction and existing block chain to online node for storage in data store.

For offline nodes, the following method is performed:
- Assign key for offline node at master node;
- Create transaction for key assignation in block chain;
- Validate key transaction at online nodes;
- Export copy of block chain with key transaction to removable storage device;
- Connect removable storage device to offline sub-system;
- Transfer copy of block chain and key to offline sub-system data store.

Once at least one offline node is operational, the removable storage device 40 may be used to enable access to it, or to otherwise permit data operations to be performed on it.

In general use, separate from the offline system, the online system 30 operates as a conventional online block chain system. Transactions created at online nodes, i.e. user terminals that are online sub-systems, are signed by the online node using a cryptographic, private key. Once signed, the transactions are propagated through the system to other online nodes for validation.

Propagation through the online system 30 is achieved using the transmission control protocol and by a gossip protocol. A gossip protocol is a protocol that spreads information between adjacent nodes to ensure the fastest receipt of information at a node. Propagation in this way ensures that online nodes receive the transaction as soon as possible. The use of the proxy to pass information on here ensures quick data progression, as well as protecting against data duplication.

Transactions are stored in blocks of the block chain. Each block is cryptographically linked to the previous entries and to the master node and other nodes. The link is achieved using a hash pointer. New blocks are created whenever there is a new operation or transaction to be done in the system (i.e. insert, update, or delete). Each operation, or set of operations, will be added to a block, along with the data related to that operation. The new block will be linked to the previous operations, in order to keep the change log as much updated as possible.

In order to maintain the integrity of the data at each offline sub-system 44, the block chain stored in the offline sub-system 44 is updated using the removable storage device 40 to provide synchronization. The offline sub-system 44 will be intermittently updated by a user visiting the sub-system 44 with the removable storage device 40. The synchronization may be performed to synchronize the data, or the synchronization may be a step to permit a data operation to be performed. In other words, the updating of the block chain in an offline node 44 may be performed for the purpose of updating the block chain or to enable another action to be performed so that the action is dependent upon successful synchronization.

In any case, to synchronize the block chains, the removable storage device 40 stores a copy of the block chain in its most recent form. To do this, the removable storage device 40 interfaces with an online sub-system 42 and copies the block chain to its data store 58 prior to any interaction with an offline sub-system 44. In some embodiments, a transaction may be created to indicate that the block chain is being copied to the removable storage device 40 and that synchronization of an offline sub-system 44 is permitted. The transaction may indicate which storage device 40 (if there is more than one) is copying the block chain and which offline sub-system 44 (if there is more than one) is being synchronized so that the master node can update its table of statuses of the nodes.

The removable storage device 40 is disconnected from the online node once the copy of the block chain ledger is stored therein, and can be transported to the offline sub-system 44 or node to permit the block chains to be synchronized at least. The removable storage device 40 interface connects to the offline sub-system 44 device interface 54, and the offline sub-system 44 processor 46 operates to update its block chain.

Initially, the offline sub-system 44 may check that the most recent transaction in the block chain is a valid transaction permitting the offline sub-system 44 to be updated. In this case, if no valid transaction is identified that fulfils this requirement, the offline sub-system 44 may terminate its connection with the removable storage device 40, and prevent any further action by the user. The offline sub-system 44 may also create a record indicating which removable storage device 40 or user did not fulfil the requirement so that at the next valid synchronization, the master node can be made aware of this fault. A valid transaction permitting the offline sub-system to be updated, is a transaction that has been validated by the required number of online sub-systems in the correct way and has not been added or tampered with, and one that indicates that the removeable storage device is allowed to interact with the offline sub-system and to update its ledger if the correct authorizations are found. The valid transaction may be generated by connecting an online sub-system and the removeable storage device, submitting a request to allow interaction between the device and the offline sub-system, granting the request by the online sub-system, validating the request by two other online sub-systems, creating a new entry in the ledger indicating the transacting granting the request, and then disconnection of the device and online sub-system.

The offline sub-system 44 also checks to ensure that the block chain is the correct block chain, so that the data integrity is maintained throughout the system 5. This is achieved by the offline sub-system 44 by comparing its block chain with the copy on the removable storage device 40. If the part of the block chain in the offline sub-system 44 is replicated exactly in the copy of the block chain, then the offline sub-system 44 can proceed with synchronization because the block chain is the correct block chain, and the data has not been tampered with.

The processor 46 of the offline sub-system 44 updates its block chain by reading the data from the removable storage device 40 and storing it in its own block chain in the same order. Once synchronization is complete, the block chain in the offline sub-system 44 will match the copy of the block chain in the removable storage device 40, and will match the online block chain up to the point at which the removable storage device 40 copied the block chain.

The offline sub-system 44 may also perform a comparison of the timestamp of the most recent transaction in the copy of the block chain with the current time, to determine how recently the removable storage device was updated. If the most recent transaction is very old, the offline sub-system 44 may refuse to synchronize or refuse access until a more recent transaction is provided in the block chain. This would reduce the possibility that a user may lose their authorisation shortly after updating their removable storage device but still attempt to gain access using their removable storage device at a later date. The offline sub-system is therefore effectively applying a time-out to the data synchronization.

The offline sub-system 44 may restrict access to a user, prevent a user from performing certain data operations, or restrict any action being performed by the user at the sub-system until the synchronization is complete.

For example, in the authorisation system of Figure 1, the PPC 22, operating as an offline sub-system 44, may prevent all access to any user until it has been synchronized. Once synchronized, the PPC 22 may permit a user to enter user privilege details such as a user ID and password to access the PPC 22. The PPC 22 can subsequently check the user privilege details against the newly updated authorisation block chain to ensure that the (1) the user is permitted to access the system using their user privilege details and (2) the user privilege details entered by the user at the user interface 50 match the most recent version of the user privilege details for that user found in the block chain. If these requirements are fulfilled, the user is permitted access. If not, the user is denied access.

In some embodiments, the offline sub-system 44 may generate a data record in the removable storage device 40 indicating that the synchronization was successful. When the removable storage device 40 next returns to the online system 30, the data record may be verified by the master node and two other online nodes to create a transaction. The record may also be used to prevent the removable storage device 40 being used to update another offline sub-system 44 where the removable storage device 40 is required to reconnect with the online system 44 before connecting to another offline sub-system 44.

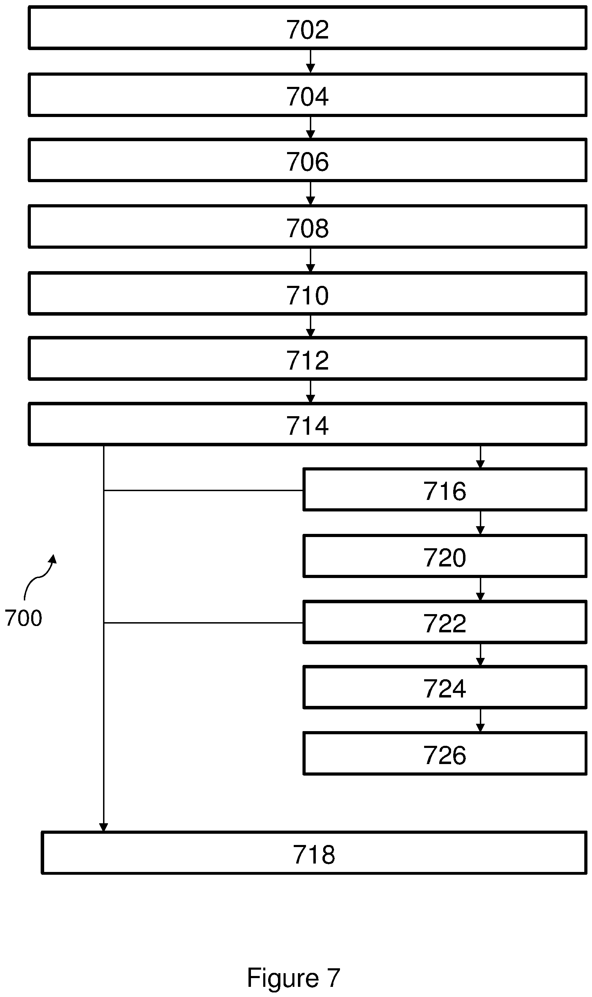

Figure 7 represents a general method 700 for the interaction between the removable storage device 40 and the online and offline systems 30, 26, in line with the interaction described above.

At step 702, a transaction is created at an online sub-system 42 to permit the removable storage device 40 to synchronize an offline sub-system 44.

At step 704, the transaction is validated by at least two other online sub-systems 42, including the master node.

At step 706, the removable storage device 40 is connected to the online sub-system 42 and updates its data store 58 to store a copy of the most recent version of the block chain.

At step 708, the removable storage device 40 is disconnected from the online sub-system 42.

At step 710, the removable storage device 40 is connected to the offline sub-system 44.

At step 712, the offline sub-system 44 accesses the copy of the online block chain stored by the removable storage device 40.

At step 714, the offline sub-system 44 checks the most recent data transaction in the copy of the online block chain in the removable storage device 40. The check is performed to determine that that most recent transaction is a valid transaction for permitting synchronization of the block chain with the offline sub-system 44. If the check does identify that the most recent transaction is valid and permits synchronization, and optionally was made within a predetermined recent time frame, the method progresses to step 716. Otherwise, the process terminates at step 718 and the offline sub-system 44 stops communication with the removable storage device 40. At step 716, the offline sub-system 44 determines that the cryptographically-linked entries stored in its partial or full version of the block chain are also present and match the entries in the copy of the block chain stored by the removable storage device 40. In other words, a check is made to see if the copy of the block chain contains an initial n blocks that are an exact replica of the partial block chain stored in the offline sub-system 44. This may be thought of as determining that there is a consensus between the block chains, and/or determining that the copy of the block chain stored by the removable storage device and the block chain in the offline sub-system are versions of the same block chain, the copy of the block chain in the removable storage device being more contemporary. If one or more entries do not match in any way, or if there is an errant additional entry anywhere in or before the blocks of the copy that are meant to match the block chain of the offline system 44, then the process terminates and proceeds to step 718 as there has been a corruption or tampering of the data, or the block chains are not the same and therefore cannot be used to update. If the initial n entries of the copy do match the partial block chain of the offline sub-system 44, step 720 is performed.

At step 720, the block chain in the offline sub-system 44 is synchronized with the copy in the removable storage device 40. The offline sub-system 44 processor 46 reads the entries in the copy and writes them to the offline sub-systems 44 data store 48, beginning from the oldest transaction that is not already found in the offline sub-system 44 block chain and progressing to the newest transaction so that no data is missed or written out of order.

At step 722, the user 51 is authorised to perform data operations at the user interface 50 of the offline sub-system 44. The user 51 may be authorised by the offline sub-system 44, by the offline sub-system 44 requesting the user 51 to identify themselves by inputting user privilege details, identifying the user based on those details, and comparing the user's identity with authorisation data. In some embodiments such as in the authorisation system of Figure 1, the authorisation data is part of the block chain. If the user 51 is permitted to access the system 44, the method progresses to step 724, where the user 51 is permitted to perform data operations. Otherwise, step 722 may repeat, or the process may be terminated.

Once data operations have been performed, the removable storage device 40 is removed at step 726 and the process terminates.

Although not illustrated here, the method may also comprise creating, by the offline sub-system 44, a data record that is separate from the block chain in the removable storage device 40 to indicate the synchronization was successful, converting the record to a transaction in the online block chain when the removable storage device 40 is connected to one of the online sub-systems 42; and validating the transaction at at least two other online sub-systems 42.

It will be appreciated that various changes and modifications can be made to the present invention without departing from the scope of the present application.

## Claims

1. A method (700) for maintaining transaction security in a distributed system (5), wherein the distributed system (5) comprises an online system (30), an offline system (26), and a removable storage device (40), the online system (30) comprising at least three online sub-systems (42) in communication via a communications network (38), and that each stores an online ledger comprising cryptographically-linked entries indicating earlier data transactions, the offline system (26) comprising one or more offline sub-systems (44) that are unable to communicate data between themselves, and the or each of which is unconnected to the network (38) and the online system (30), the offline sub-system (44) storing an offline ledger that is a full or partial copy of the online ledger, and the removable storage device (40) having a data store (58) configured to store a copy of the online ledger and to interface with at least one online sub-system (42) and with the offline sub-system (44) independently, such that the removable storage device (40) only interfaces with one of the online sub-system (30) and offline sub-system (44) at any one time, the method (700) comprising the steps of:
accessing (712), at the offline sub-system (44), the copy of the online ledger stored by the removable storage device (40) when the device (40) is connected to the offline sub-system (44) and unconnected to the network (38) and the online system (30);
checking (714), by the offline sub-system (44), that a most recent data transaction in the copy of the online ledger is a valid transaction for synchronizing the ledger with the offline sub-system (44), wherein a valid transaction is a most recent transaction that is generated at one of the at least one online sub-systems (32) that indicates that the removeable storage device (40) will be connecting to the offline sub-system (26), and in response:
determining (716), by the offline sub-system (44), that the copy of the online ledger stored by the removable storage device (40) and the offline ledger are versions of the same ledger; and
in response to determining that the copy of the online ledger and the offline ledger are versions of the same ledger;
updating (720), by the offline sub-system (44), the offline ledger with reference to the online ledger thereby achieving synchronisation between the offline ledger and the online ledger;
wherein updating the offline ledger with reference to the online ledger comprises replicating all entries that are identified in the copy of the online ledger on the removable storage device on the offline ledger so that the offline and the copy of the online ledger are identical.

2. The method (700) according to claim 1, comprising terminating (718) interaction with the removable storage device (40) if it is determined that the copy of the online ledger and the offline ledger are not versions of the same ledger.

3. The method (700) according to claim 1 or claim 2, comprising authorising (722) the user, and permitting data operations to be performed by the authorised user only when synchronisation is achieved between the offline and online ledger.

4. The method (700) according to claim 3, wherein authorising (722) the user comprises:
determining a user identity credential;
comparing the identity credential of the user with predetermined authorisation data, wherein the user is an authorised user if the identity credential matches the authorisation data.

5. The method (700) according to claim 4, wherein the offline ledger comprises the authorisation data.

6. The method (700) according to any preceding claim, comprising:
if the most recent data transaction is not a valid transaction for synchronizing the ledger, terminating interaction with the removable storage device (40); and
creating a data record that is separate from the offline ledger indicating the identity of the removable storage device (40) and/or user.

7. The method (700) according to any preceding claim, comprising:
generating, by the offline sub-system (44), a data record that is separate from the ledger in the removable storage device (40) to indicate the synchronization was successful;
converting the record to a transaction in the online ledger when the removable storage device (40) is connected to one of the online sub-systems (42); and validating the transaction at two other online sub-systems (42) at least.

8. The method (700) according to any preceding claim, comprising, at one of the online sub-systems:
performing one or more transactions in response to a request from the user;
propagating the performed transaction to and receive validation of the transaction from at least the two other online sub-systems (42) via the communications network (38); and
storing the transaction as an entry or part of an entry of the online ledger in response to receiving the validations.

9. A system (5) for maintaining transaction security between online and offline sub-systems (42, 44), the system (5) comprising:
an online system (30) comprising three online sub-systems (42) in communication via a communications network (38), and that each stores an online ledger comprising cryptographically-linked entries indicating earlier data transactions;
an offline system (26) comprising one or more offline sub-systems (44) that are unable to communicate data between themselves, and the or each of which is unconnected to the network (38) and the online system (30), the offline sub-system (44) storing an offline ledger that is a full or partial copy of the online ledger; and
a removable storage device (40) having a data store (58) configured to store a copy of the online ledger and configured to interface with at least one online sub-system (42) and the offline sub-system (44) independently, such that the removable storage device only interfaces with one of the online sub-system and offline sub-system at any one time , and
wherein the system (5) is configured to perform the method (700) according to any one of claims 1 to 8.

10. The system (5) according to claim 9, wherein each online sub-system (42) comprises:
an online sub-system data store (48) storing the online ledger;
a user interface (50) for receiving input from a user;
a communications module (52) for communication with at least two other online sub-systems (42) via a communications network (38) that each store the online ledger and are configured to validate transactions performed by any online sub-system (42) connected to the network (38);
a device interface (54) for interacting with the removable storage device (40); and
a processor (46) in communication with each of the data store (48), the user interface (50), the device interface (54), and the communications module (52).

11. The system (5) according to claim 10, wherein the processor is configured to:
perform one or more transactions in response to a request from the user;
propagate the performed transaction to and receive validation of the transaction from at least the two other online sub-systems (42) via the communications network (38); and
store the transaction as an entry or part of an entry of the online ledger in response to receiving the validations.

12. The system (5) according to any one of claims 9 to 11, wherein the offline sub-system (44) comprises:
an offline sub-system data store (48) storing the offline ledger;
an interface (50) for receiving input from a user;
a device interface (54) for interacting with the removable storage device (40); and
a processor (46) configured, at least, to:
access the copy of the online ledger stored by the removable storage device (40) when the device (40) is connected to the offline sub-system (44) and unconnected to the network (38) and the online system (30);
determine that the copy of the online ledger stored by the removable storage device (40) and the offline ledger are versions of the same ledger; and
in response to determining that the copy of the online ledger and the offline ledger are versions of the same ledger:
update the offline ledger with reference to the online ledger thereby achieving synchronisation between the offline ledger and the online ledger.

13. The system (5) according to any of claims 9 to 12 comprising a plurality of offline sub-systems (44) and/or a plurality of removable storage devices (40).

14. The system (5) according to any of claims 9 to 13, wherein the offline sub-system (44) is a wind turbine controller (22) or a power plant controller (20).

## Patentansprüche

1. Verfahren (700) zum Aufrechterhalten von Transaktionssicherheit in einem verteilten System (5), wobei das verteilte System (5) ein Online-System (30), ein Offline-System (26) und eine entfernbare Speichervorrichtung (40) umfasst, wobei das Online-System (30) mindestens drei Online-Subsysteme (42) umfasst, die über ein Kommunikationsnetzwerk (38) in Verbindung stehen, und jedes ein Online-Hauptbuch speichert, das kryptografisch verlinkte Einträge enthält, die frühere Datentransaktionen angeben, wobei das Offline-System (26) ein oder mehrere Offline-Subsysteme (44) umfasst, die nicht in der Lage sind, untereinander Daten zu kommunizieren, und wobei das oder jedes davon nicht mit dem Netzwerk (38) und dem Online-System (30) verbunden ist, wobei das Offline-Subsystem (44) ein Offline-Hauptbuch speichert, das eine vollständige oder teilweise Kopie des Online-Hauptbuchs ist, und die entfernbare Speichervorrichtung (40) einen Datenspeicher (58) aufweist, der konfiguriert ist, um eine Kopie des Online-Hauptbuchs zu speichern und unabhängig mit mindestens einem Online-Subsystem (42) und mit dem Offline-Subsystem (44) eine Schnittstelle zu bilden, sodass die entfernbare Speichervorrichtung (40) nur mit einem des Online-Subsystems (30) und Offline-Subsystems (44) zu einem beliebigen Zeitpunkt eine Schnittstelle bildet, wobei das Verfahren (700) die Schritte umfasst zum:
Zugreifen (712) im Offline-Subsystem (44) auf die Kopie des Online-Hauptbuchs, die in der entfernbaren Speichervorrichtung (40) gespeichert ist, wenn die Vorrichtung (40) mit dem Offline-Subsystem (44) verbunden ist und nicht mit dem Netzwerk (38) und dem Online-System (30) verbunden ist;
Überprüfen (714) durch das Offline-Subsystem (44), ob eine jüngste Datentransaktion in der Kopie des Online-Hauptbuchs eine gültige Transaktion zum Synchronisieren des Hauptbuchs mit dem Offline-Subsystem (44) ist, wobei eine gültige Transaktion eine jüngste Transaktion ist, die in einem der mindestens einen Online-Subsysteme (32) generiert wird, die angibt, dass sich die entfernbare Speichervorrichtung (40) mit dem Offline-Subsystem (26) verbinden wird, und als Reaktion darauf:
Bestimmen (716) durch das Offline-Subsystem (44), dass die Kopie des Online-Hauptbuchs, die durch die entfernbare Speichervorrichtung (40) gespeichert wird, und das Offline-Hauptbuch Versionen desselben Hauptbuchs sind; und als Reaktion auf das Bestimmen, dass die Kopie des Online-Hauptbuchs und das Offline-Hauptbuch Versionen desselben Hauptbuchs sind;
Aktualisieren (720) durch das Offline-Subsystem (44) des Offline-Hauptbuchs in Bezug auf das Online-Hauptbuch, wodurch eine Synchronisierung zwischen dem Offline-Hauptbuch und dem Online-Hauptbuch erreicht wird; wobei das Aktualisieren des Offline-Hauptbuchs in Bezug auf das Online-Hauptbuch das Replizieren aller Einträge, die in der Kopie des Online-Hauptbuchs auf der entfernbaren Speichervorrichtung identifiziert sind, auf dem Offline-Hauptbuch umfasst, sodass das Offline und die Kopie des Online-Hauptbuchs identisch sind.

2. Verfahren (700) nach Anspruch 1, das das Beenden (718) der Interaktion mit der entfernbaren Speichervorrichtung (40) umfasst, wenn bestimmt wird, dass die Kopie des Online-Hauptbuchs und des Offline-Hauptbuchs keine Versionen desselben Hauptbuchs sind.

3. Verfahren (700) nach Anspruch 1 oder Anspruch 2, das das Zulassen (722) des Benutzers und das Erlauben der Durchführung von Datenoperationen durch den zugelassenen Benutzer nur dann, wenn Synchronisierung zwischen dem Offline- und dem Online-Hauptbuch erreicht wurde, umfasst.

4. Verfahren (700) nach Anspruch 3, wobei das Zulassen (722) des Benutzers umfasst:
Bestimmen von Benutzeridentitätsanmeldedaten;
Vergleichen der Identitätsanmeldedaten des Benutzers mit vorbestimmten Zulassungsdaten, wobei der Benutzer ein zugelassener Benutzer ist, wenn die Identitätsanmeldedaten mit den Zulassungsdaten übereinstimmen.

5. Verfahren (700) nach Anspruch 4, wobei das Offline-Hauptbuch die Zulassungsdaten umfasst.

6. Verfahren (700) nach einem vorstehenden Anspruch, umfassend:
wenn die jüngste Datentransaktion keine gültige Transaktion zum Synchronisieren des Hauptbuches ist, Beenden der Interaktion mit der entfernbaren Speichervorrichtung (40); und
Erstellen eines vom Offline-Hauptbuch getrennten Datensatzes, der die Identität der entfernbaren Speichervorrichtung (40) und/oder des Benutzers angibt.

7. Verfahren (700) nach einem vorstehenden Anspruch, umfassend:
Erzeugen durch das Offline-Subsystem (44) eines Datensatzes, der vom Hauptbuch in der entfernbaren Speichervorrichtung (40) getrennt ist, um anzugeben, dass die Synchronisierung erfolgreich war;
Umwandeln des Satzes in eine Transaktion im Online-Hauptbuch, wenn die entfernbare Speichervorrichtung (40) mit einem der Online-Subsysteme (42) verbunden ist; und
Validieren der Transaktion in mindestens zwei weiteren Online-Subsystemen (42).

8. Verfahren (700) nach einem vorstehenden Anspruch, das in einem der Online-Subsysteme umfasst:
Durchführen einer oder mehrerer Transaktionen als Reaktion auf eine Anfrage von dem Benutzer;
Weiterleiten der durchgeführten Transaktion an mindestens die beiden anderen Online-Subsysteme (42) und Empfangen einer Validierung der Transaktion von diesen über das Kommunikationsnetzwerk (38); und
Speichern der Transaktion als Eintrag oder Teil eines Eintrags des Online-Hauptbuchs als Reaktion auf den Erhalt der Validierungen.

9. System (5) zum Aufrechterhalten der Transaktionssicherheit zwischen Online- und Offline-Subsystemen (42, 44), wobei das System (5) umfasst:
ein Online-System (30), das drei Online-Subsysteme (42) umfasst, die über ein Kommunikationsnetzwerk (38) in Verbindung stehen, und jedes ein Online-Hauptbuch speichert, das kryptografisch verlinkte Einträge enthält, die frühere Datentransaktionen angeben;
ein Offline-System (26), das ein oder mehrere Offline-Subsysteme (44) umfasst, die nicht in der Lage sind, untereinander Daten zu kommunizieren, und wobei das oder jedes davon nicht mit dem Netzwerk (38) und dem Online-System (30) verbunden ist, wobei das Offline-Subsystem (44) ein Offline-Hauptbuch speichert, das eine vollständige oder teilweise Kopie des Online-Hauptbuchs ist; und
eine entfernbare Speichervorrichtung (40), die einen Datenspeicher (58) aufweist, der konfiguriert ist, um eine Kopie des Online-Hauptbuchs zu speichern und konfiguriert ist, um unabhängig mit mindestens einem Online-Subsystem (42) und dem Offline-Subsystem (44) eine Schnittstelle zu bilden, sodass die entfernbare Speichervorrichtung nur mit einem des Online-Subsystems und Offline-Subsystems zu einem beliebigen Zeitpunkt eine Schnittstelle bildet,
wobei das System (5) konfiguriert ist, um das Verfahren (700) nach einem der Ansprüche 1 bis 8 durchzuführen.

10. System (5) nach Anspruch 9, wobei jedes Online-Subsystem (42) umfasst:
einen Online-Subsystem-Datenspeicher (48), der das Online-Hauptbuch speichert;
eine Benutzeroberfläche (50) zum Empfangen von Eingaben von einem Benutzer;
ein Kommunikationsmodul (52) zur Kommunikation mit mindestens zwei anderen Online-Subsystemen (42) über ein Kommunikationsnetzwerk (38), die jeweils das Online-Hauptbuch speichern und konfiguriert sind, um Transaktionen zu validieren, die von einem beliebigen mit dem Netzwerk (38) verbundenen Online-Subsystem (42) durchgeführt werden;
eine Vorrichtungsschnittstelle (54) zum Interagieren mit der entfernbaren Speichervorrichtung (40); und
einen Prozessor (46) in Verbindung mit dem Datenspeicher (48), der Benutzeroberfläche (50), der Vorrichtungsschnittstelle (54) und dem Kommunikationsmodul (52).

11. System (5) nach Anspruch 10, wobei der Prozessor konfiguriert ist, um:
eine oder mehrere Transaktionen als Reaktion auf eine Anfrage von dem Benutzer durchzuführen;
die durchgeführte Transaktion über das Kommunikationsnetzwerk (38) an mindestens die beiden anderen Online-Subsysteme (42) weiterzuleiten und von diesen eine Validierung der Transaktion zu empfangen; und
die Transaktion als Eintrag oder Teil eines Eintrags des Online-Hauptbuchs als Reaktion auf den Erhalt der Validierungen zu speichern.

12. System (5) nach einem der Ansprüche 9 bis 11, wobei das Offline-Subsystem (44) umfasst:
einen Offline-Subsystem-Datenspeicher (48), der das Offline-Hauptbuch speichert;
eine Schnittstelle (50) zum Empfangen von Eingaben von einem Benutzer;
eine Vorrichtungsschnittstelle (54) zum Interagieren mit der entfernbaren Speichervorrichtung (40); und
einen Prozessor (46), der mindestens konfiguriert ist, um:
auf die Kopie des Online-Hauptbuchs, die in der entfernbaren Speichervorrichtung (40) gespeichert ist, zuzugreifen, wenn die Vorrichtung (40) mit dem Offline-Subsystem (44) verbunden ist und nicht mit dem Netzwerk (38) und dem Online-System (30) verbunden ist;
zu bestimmen, dass die Kopie des Online-Hauptbuchs, die durch die entfernbare Speichervorrichtung (40) gespeichert wird, und das Offline-Hauptbuch Versionen desselben Hauptbuchs sind; und
als Reaktion auf das Bestimmen, dass die Kopie des Online-Hauptbuchs und das Offline-Hauptbuch Versionen desselben Hauptbuchs sind:
das Offline-Hauptbuch in Bezug auf das Online-Hauptbuch zu aktualisieren, wodurch eine Synchronisierung zwischen dem Offline-Hauptbuch und dem Online-Hauptbuch erreicht wird.

13. System (5) nach einem der Ansprüche 9 bis 12, das eine Vielzahl von Offline-Subsystemen (44) und/oder eine Vielzahl von entfernbaren Speichervorrichtungen (40) umfasst.

14. System (5) nach einem der Ansprüche 9 bis 13, wobei das Offline-Subsystem (44) eine Windkraftanlagensteuerung (22) oder eine Parksteuervorrichtung (20) ist.

## Revendications

1. Procédé (700) pour conserver une sécurité de transaction dans un système distribué (5), dans lequel le système distribué (5) comprend un système en ligne (30), un système hors ligne (26) et un dispositif de stockage amovible (40), le système en ligne (30) comprenant au moins trois sous-systèmes en ligne (42) en communication par le biais d'un réseau de communication (38), et qui stockent chacun un registre en ligne comprenant des entrées liées cryptographiquement indiquant des transactions de données antérieures, le système hors ligne (26) comprenant un ou plusieurs sous-systèmes hors ligne (44) qui ne peuvent pas communiquer de données entre eux, et dont le ou chacun d'eux n'est pas connecté au réseau (38) et au système en ligne (30), le sous-système hors ligne (44) stockant un registre hors ligne qui est une copie complète ou partielle du registre en ligne, et le dispositif de stockage amovible (40) présentant un magasin de données (58) configuré pour stocker une copie du registre en ligne et pour avoir une interface avec au moins un sous-système en ligne (42) et avec le sous-système hors ligne (44) indépendamment, de telle sorte que le dispositif de stockage amovible (40) ait une interface uniquement avec l'un du sous-système en ligne (30) et du sous-système hors ligne (44) à tout moment, le procédé (700) comprenant les étapes consistant à :
avoir accès (712), au niveau du sous-système hors ligne (44), à la copie du registre en ligne stockée par le dispositif de stockage amovible (40) lorsque le dispositif (40) est connecté au sous-système hors ligne (44) et déconnecté du réseau (38) et du système en ligne (30) ;
vérifier (714), au moyen du sous-système hors ligne (44), que la transaction de données la plus récente dans la copie du registre en ligne est une transaction valide pour synchroniser le registre avec le sous-système hors ligne (44), dans lequel une transaction valide est la transaction la plus récente qui est générée sur l'un du au moins un sous-système en ligne (32) qui indique que le dispositif de stockage amovible (40) va se connecter au sous-système hors ligne (26), et en réponse :
déterminer (716), au moyen du sous-système hors ligne (44), que la copie du registre en ligne stockée par le dispositif de stockage amovible (40) et du registre hors ligne sont des versions du même registre ; et, à la suite de la détermination que la copie du registre en ligne et du registre hors ligne sont des versions du même registre ;
mettre à jour (720), au moyen du sous-système hors ligne (44), le registre hors ligne en référence au registre en ligne, ce qui permet de réaliser une synchronisation entre le registre hors ligne et le registre en ligne ; dans lequel la mise à jour du registre hors ligne en référence au registre en ligne comprend la réplication de toutes les entrées qui sont identifiées dans la copie du registre en ligne sur le dispositif de stockage amovible sur le registre hors ligne de telle sorte que le registre hors ligne et la copie du registre en ligne soient identiques.

2. Procédé (700) selon la revendication 1, comprenant la fin (718) d'une interaction avec le dispositif de stockage amovible (40) s'il est déterminé que la copie du registre en ligne et du registre hors ligne ne sont pas des versions du même registre.

3. Procédé (700) selon la revendication 1 ou 2, comprenant l'autorisation (722) de l'utilisateur et la permission de réaliser des opérations de données par l'utilisateur autorisé uniquement lorsque la synchronisation est réalisée entre le registre hors ligne et le registre en ligne.

4. Procédé (700) selon la revendication 3, dans lequel l'autorisation (722) de l'utilisateur comprend :
la détermination d'un justificatif d'identité de l'utilisateur ;
la comparaison du justificatif d'identité de l'utilisateur à des données d'autorisation prédéterminées, dans lequel l'utilisateur est un utilisateur autorisé si le justificatif d'identité correspond aux données d'autorisation.

5. Procédé (700) selon la revendication 4, dans lequel le registre hors ligne comprend les données d'autorisation.

6. Procédé (700) selon une quelconque revendication précédente, comprenant :
si la transaction de données la plus récente n'est pas une transaction valide pour synchroniser le registre, la fin de l'interaction avec le dispositif de stockage amovible (40) ; et
la création d'un enregistrement de données qui est distinct du registre hors ligne indiquant l'identité du dispositif de stockage amovible (40) et/ou de l'utilisateur.

7. Procédé (700) selon une quelconque revendication précédente, comprenant :
la génération, par le sous-système hors ligne (44), d'un enregistrement de données qui est distinct du registre dans le dispositif de stockage amovible (40) pour indiquer que la synchronisation a réussi ;
la conversion de l'enregistrement en une transaction dans le registre en ligne lorsque le dispositif de stockage amovible (40) est connecté à l'un des sous-systèmes en ligne (42) ; et
la validation de la transaction au niveau de deux autres sous-systèmes en ligne (42) au moins.

8. Procédé (700) selon une quelconque revendication précédente, comprenant, au niveau de l'un des sous-systèmes en ligne :
la réalisation d'une ou de plusieurs transactions en réponse à une demande de l'utilisateur ;
la propagation de la transaction réalisée aux au moins deux autres sous-systèmes en ligne (42) et la réception de la validation de la transaction en provenance de ceux-ci par le biais du réseau de communication (38) ; et
le stockage de la transaction en tant qu'entrée ou partie d'une entrée du registre en ligne à la suite de la réception des validations.

9. Système (5) pour conserver une sécurité de transaction entre des sous-systèmes en ligne et hors ligne (42, 44), le système (5) comprenant :
un système en ligne (30) comprenant trois sous-systèmes en ligne (42) en communication par le biais d'un réseau de communication (38), et qui stockent chacun un registre en ligne comprenant des entrées liées cryptographiquement indiquant des transactions de données antérieures ;
un système hors ligne (26) comprenant un ou plusieurs sous-systèmes hors ligne (44) qui ne peuvent pas communiquer des données entre eux, et dont le ou chacun d'eux n'est pas connecté au réseau (38) et au système en ligne (30), le sous-système hors ligne (44) stockant un registre hors ligne qui est une copie complète ou partielle du registre en ligne ; et
un dispositif de stockage amovible (40) présentant un magasin de données (58) configuré pour stocker une copie du registre en ligne et configuré pour avoir une interface avec au moins un sous-système en ligne (42) et le sous-système hors ligne (44) indépendamment, de telle sorte que le dispositif de stockage amovible ait une interface uniquement avec l'un du sous-système en ligne et du sous-système hors ligne à tout moment, et
dans lequel le système (5) est configuré pour réaliser le procédé (700) selon l'une quelconque des revendications 1 à 8.

10. Système (5) selon la revendication 9, dans lequel chaque sous-système en ligne (42) comprend :
un magasin de données de sous-système en ligne (48) stockant le registre en ligne ;
une interface utilisateur (50) pour recevoir une entrée d'un utilisateur ;
un module de communication (52) pour communiquer avec au moins deux autres sous-systèmes en ligne (42) par le biais d'un réseau de communication (38) qui stockent chacun le registre en ligne et sont configurés pour valider des transactions réalisées par tout sous-système en ligne (42) connecté au réseau (38) ;
une interface de dispositif (54) pour interagir avec le dispositif de stockage amovible (40) ; et
un processeur (46) en communication avec chacun du magasin de données (48), de l'interface utilisateur (50), de l'interface de dispositif (54) et du module de communication (52).

11. Système (5) selon la revendication 10, dans lequel le processeur est configuré pour :
réaliser une ou plusieurs transactions en réponse à une demande de l'utilisateur ;
propager la transaction réalisée aux au moins deux autres sous-systèmes en ligne (42) et recevoir la validation de la transaction en provenance de ceux-ci par le biais du réseau de communication (38) ; et
stocker la transaction en tant qu'entrée ou partie d'une entrée du registre en ligne à la suite de la réception des validations.

12. Système (5) selon l'une quelconque des revendications 9 à 11, dans lequel le sous-système hors ligne (44) comprend :
un magasin de données de sous-système hors ligne (48) stockant le registre hors ligne ;
une interface (50) pour recevoir une entrée d'un utilisateur ;
une interface de dispositif (54) pour interagir avec le dispositif de stockage amovible (40) ; et
un processeur (46) configuré, au moins, pour :
avoir accès à la copie du registre en ligne stockée par le dispositif de stockage amovible (40) lorsque le dispositif (40) est connecté au sous-système hors ligne (44) et déconnecté du réseau (38) et du système en ligne (30) ;
déterminer que la copie du registre en ligne stockée par le dispositif de stockage amovible (40) et du registre hors ligne sont des versions du même registre ; et
à la suite de la détermination que la copie du registre en ligne et du registre hors ligne sont des versions du même registre :
mettre à jour le registre hors ligne en référence au registre en ligne, ce qui permet de réaliser une synchronisation entre le registre hors ligne et le registre en ligne.

13. Système (5) selon l'une quelconque des revendications 9 à 12, comprenant une pluralité de sous-systèmes hors ligne (44) et/ou une pluralité de dispositifs de stockage amovibles (40).

14. Système (5) selon l'une quelconque des revendications 9 à 13, dans lequel le sous-système hors ligne (44) est un dispositif de commande d'éolienne (22) ou un dispositif de commande de centrale électrique (20).
